# EUROPEAN PATENT APPLICATION

(11) **EP 4 007 382 A1**
(43) Date of publication of application: **01.06.2022**
(21) Application number: 20855482.4
(22) Date of filing: 07.07.2020
(51) Int. Cl.: H04W 52/26, H04W 76/34

(54) **METHOD FOR DISCONNECTING WIFI NETWORK AND RELATED DEVICE**

(30) Priority: 19.08.2019 CN 201910765213
(71) Applicant: GUANGDONG OPPO MOBILE TELECOMMUNICATIONS CORP., LTD., Dongguan, Guangdong 523860 (CN)
(72) Inventor: HUANG, Yuan, Dongguan, Guangdong 523860 (CN)
(74) Representative: Taor, Simon Edward William
(86) International application number: PCT/CN2020/100672
(87) International publication number: WO 2021/031728

(57) **Abstract**

A WIFI network disconnecting method and related devices are provided, which are applied to an electronic device accessing two WIFI networks. The method includes the following. A target WIFI network is determined, the two WIFI networks including the target WIFI network. A transmission rate of the target WIFI network is monitored periodically. The target WIFI network is disconnected in response to monitoring that the transmission rate of the target WIFI network is less than a first transmission rate for N times, N being an integer greater than 1. By means of implementations of the disclosure, power consumption of the electronic device can be reduced.

## Description

### TECHNICAL FIELD

The disclosure relates to the field of electronics technology, in particular to a WIFI network disconnecting method and related devices.

### BACKGROUND

With a dual wireless fidelity (WIFI) function, an electronic device can access two WIFI networks, which enables the electronic device to have a greater transmission rate, but also increases power consumption of the electronic device. In some cases, the electronic device accesses the two WIFI networks, which does not bring outstanding contribution to the electronic device in terms of transmission rate, but increases power consumption of the electronic device.

### SUMMARY

Implementations of the disclosure provide a WIFI network disconnecting method and related devices, which can reduce power consumption of an electronic device.

In a first aspect, the implementations of the present disclosure provide a WIFI network disconnecting method, which is applied to an electronic device currently accessing two WIFI networks. The method includes the following. A target WIFI network is determined, the two WIFI networks including the target WIFI network. A transmission rate of the target WIFI network is monitored periodically. The target WIFI network is disconnected in response to monitoring that the transmission rate of the target WIFI network is less than a first transmission rate for N times, N being an integer greater than 1.

In a second aspect, the implementations of the present disclosure provide a WIFI network disconnecting device, which includes a determining unit, a transmission rate monitoring unit, and a network disconnecting unit.

The determining unit is configured to determine a target WIFI network, the two WIFI networks including the target WIFI network. The transmission rate monitoring unit is configured to monitor a transmission rate of the target WIFI network periodically. The network disconnecting unit is configured to disconnect the target WIFI network in response to monitoring that the transmission rate of the target WIFI network is less than a first transmission rate for N times, N being an integer greater than 1.

In a third aspect, the implementations of the present disclosure provide an electronic device. The electronic device includes a processor, a memory, a communication interface, and one or more programs. The one or more programs are stored in the memory and configured to be executed by the processor, and the programs include instructions for executing operations of the method described in the first aspect of the implementations of the present disclosure.

In a fourth aspect, the implementations of the present disclosure provide a computer-readable storage medium. The computer-readable storage medium stores a computer program for Electronic Data Interchange (EDI). The computer program causes a computer to perform part or all of operations of the method described in the first aspect of the implementations of the present disclosure.

In a fifth aspect, the implementations of the present disclosure provide a computer program product. The computer program product includes a non-transitory computer readable storage medium storing a computer program. The computer program is operable to cause a computer to perform part or all of operations of the method described in the first aspect of the implementations of the present disclosure. The computer program product may be a software installation package.

It can be seen that, in the implementations of the disclosure, the electronic device first determines one of the two accessed WIFI networks, then monitors the transmission rate of the one of the WIFI networks periodically, and finally disconnects the one of the two WIFI networks in response to monitoring that the transmission rate of the one of the two WIFI networks is less than a certain value for multiple times, so as to disconnect one of the WIFI networks according to actual situations of the WIFI networks, thereby reducing power consumption of the electronic device.

### BRIEF DESCRIPTION OF THE DRAWINGS

To describe technical solutions in implementations of the present disclosure more clearly, the following briefly introduces accompanying drawings required for illustrating the the implementations. Apparently, the accompanying drawings in the following description illustrate some implementations of the present disclosure. Those of ordinary skill in the art may also obtain other drawings based on these accompanying drawings without creative efforts.
FIG. 1A is a schematic structural diagram of a communication system provided in implementations of the present disclosure.
FIG. 1B is a schematic structural diagram of an electronic device provided in implementations of the present disclosure.
FIG. 2A is a schematic flow diagram of a WIFI network disconnecting method provided in implementations of the present disclosure.
FIG. 2B is a schematic diagram of an interface for enabling a dual-WIFI function provided in implementations of the present disclosure.
FIG. 2C is a schematic diagram of a WIFI setting interface provided in implementations of the present disclosure.
FIG. 3A is a schematic flow diagram of a WIFI network disconnecting method provided in other implementations of the present disclosure.
FIG. 3B is a schematic diagram of disconnecting a WIFI network provided in implementations of the present disclosure.
FIG. 4 is a schematic structural diagram of an electronic device provided in other implementations of the present disclosure.
FIG. 5 is a schematic structural diagram of a WIFI network disconnecting device provided in implementations of the present disclosure.

### DETAILED DESCRIPTION

Terms used in implementations of the disclosure are only intended to explain specific implementations of the disclosure, and are not intended to limit the disclosure. Terms "first", "second", "third" and "fourth" in the specification and claims of the disclosure and the drawings are used to distinguish different objects, but not to describe a specific order. Further, Terms "including" and "having" and any variations thereof are intended to cover non-exclusive inclusion.

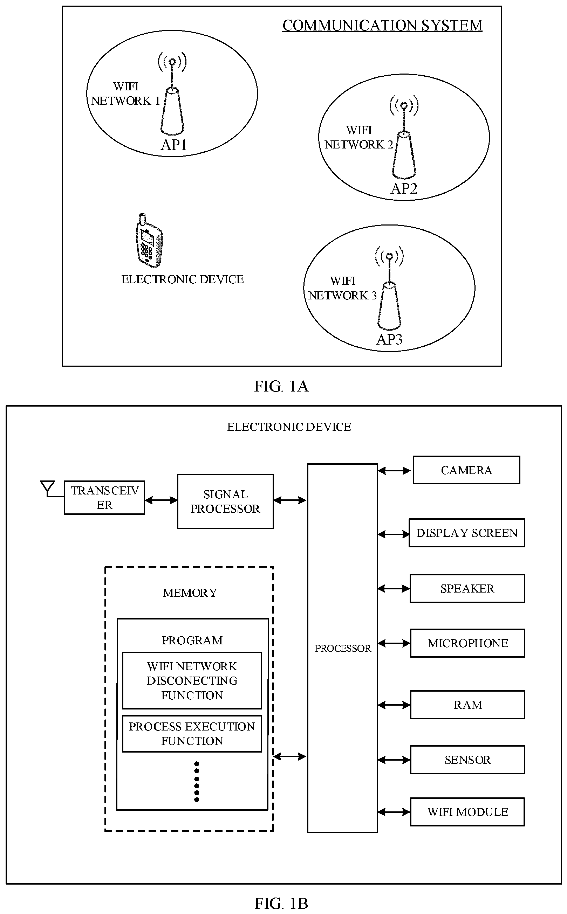

FIG. 1A illustrates a communication system provided in implementations of the disclosure, referring to FIG. 1A, the communication system includes an electronic device and multiple wireless Access Points (AP), and an AP is an access point of a WIFI network. In the implementations of the disclosure, the electronic device supports a dual-WIFI function, that is, the electronic device can access two WIFI networks. For example, the electronic device can access WIFI network 1 through API and WIFI network 2 through AP2. Forms and numbers of the electronic devices and APs illustrated in FIG. 1A are by way of example only, and do not present a limitation on implementations of the disclosure.

The electronic device can access the WIFI network as follows. Firstly, the electronic device performs a WIFI scan to obtain a connectable WIFI network, then the electronic device sends a WIFI network access request to an AP of the connectable WIFI network, then the AP of the connectable WIFI network sends a WIFI network access response to the electronic device for the WIFI network access request, and finally, the electronic device receives the WIFI network access response so as to access the WIFI network.

The electronic device can include various handheld devices, vehicle-mounted devices, wearable devices, computing devices with a wireless communication function or other processing devices connected to a wireless modem, as well as various forms of User Equipment (UE), Mobile Station (MS), terminal device and the like.

FIG. 1B is a schematic structural diagram of an electronic device according to implementations of the present disclosure. As illustrated in FIG. 1B, the electronic device includes a processor, a memory, a signal processor, a transceiver, a display screen, a speaker, a microphone, a Random Access Memory (RAM), a camera, a sensor, a WIFI module, and the like. The memory, the signal processor, the display screen, the speaker, the microphone, the RAM, the camera, the sensor, and the WIFI module are connected with the processor, and the transceiver is connected with the signal processor.

The display screen can be a liquid crystal display (LCD), an organic light-emitting diode (OLED) or inorganic light-emitting diode, an active matrix organic light emitting diode (AMOLED), etc.

The camera can be an ordinary camera or an infrared camera, which is not limited herein. The camera can be a front camera or a rear camera, which is not limited herein.

The sensor includes at least one of the following: a light sensor, a gyroscope, an infrared proximity sensor, a fingerprint sensor, a pressure sensor, etc. The light sensor, also known as an ambient light sensor, is configured to detect brightness of ambient light. The light sensor may include a photosensitive element and an analog-to-digital converter. The photosensitive element is configured to convert a collected optical signal into an electrical signal, and the analog-to-digital converter is configured to convert the electrical signal into a digital signal. Optionally, the light sensor can also include a signal amplifier, which can amplify the electrical signal converted by the photosensitive element and then output it to the analog-to-digital converter. The photosensitive element may include at least one of a photodiode, a phototransistor, a photoresistor, and a silicon photocell.

The processor is a control center of the electronic device, which connects all parts of the whole electronic device using various interfaces and lines. By running or executing software programs and/or modules stored in the memory and calling data stored in the memory, the processor can perform various functions of the electronic device and process data, so as to monitor the electronic device as a whole.

The processor can be integrated with an application processor and a modem processor. The application processor mainly handles with an operating system, a user interface, and an application, and the modem processor mainly handles with wireless communications. It can be understood that the above modem processor may not be integrated into the processor.

The memory is configured to store software programs and/or modules, and the processor executes various functional applications of the electronic device and processes data by running the software programs and/or modules stored in the memory. The memory can mainly include a program storage area and a data storage area. The operating system, software programs required by at least one function, etc. can be stored in the program storage area. Data created according to use of the electronic device and the like can be stored in the data storage area. In addition, the memory may include a highspeed random access memory, or may include a non-volatile memory, such as at least one magnetic disk memory device, flash memory device, or other volatile solid-state memory devices.

The WIFI module supports a dual-WIFI (also known as dual-band WIFI) function so that the electronic device can operate at 2.4G and 5G simultaneously. With this WIFI module, one electronic device can access two different WIFI networks at the same time, so as to visit the Internet with the two WIFI networks at the same time, thus obtaining a greater transmission rate and lower network delay. The WIFI module can be, for example, a dual band dual concurrent (DBDC) module, a Dual Band Simultaneous (DBS) module, or other chip modules.

Implementations of the disclosure will be explained in detail below.

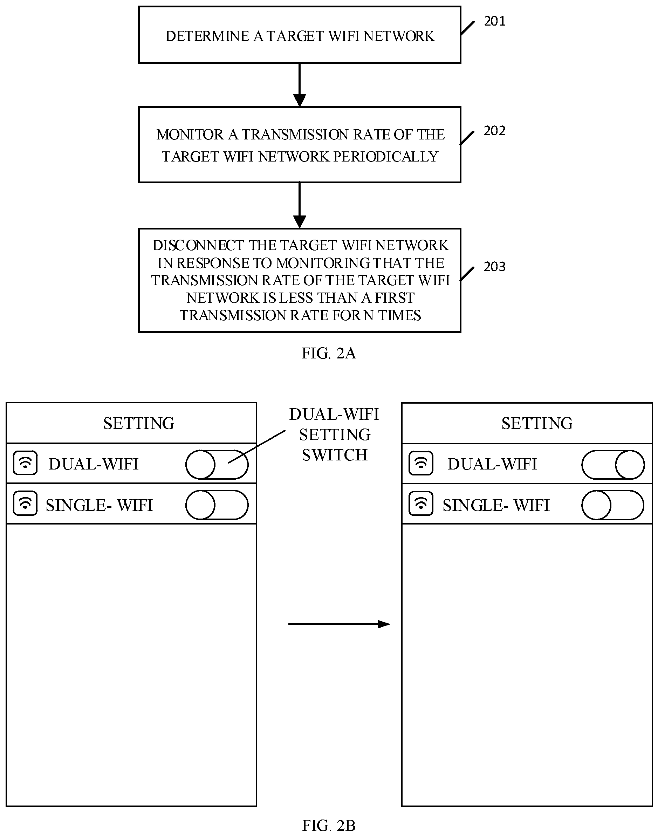

Implementations of the disclosure provide a WIFI network disconnecting method, which is applied to an electronic device currently accessing two WIFI networks. Specifically, as illustrated in FIG. 2A, the method includes the following.

At 201, the electronic device determines a target WIFI network, where the two WIFI networks include the target WIFI network.

The target WIFI network is one of the two WIFI networks with a lower transmission rate. For example, the two WIFI networks can be WIFI network 1 and WIFI network 2. If a transmission rate of WIFI network 1 is less than that of WIFI network 2, then WIFI network 1 is the target WIFI network.

Alternatively, the target WIFI network is any one of the two WIFI networks. For example, the two WIFI networks is WIFI network 1 and WIFI network 2, and the target WIFI network can be WIFI network 1 or WIFI network 2.

Before performing operations at 201, the electronic device enables the dual-WIFI function first. A specific implementation for the electronic device to enable the dual-WIFI function is as follows. The electronic device presents a setting interface with a dual-WIFI setting item. The dual-WIFI setting item includes a dual-WIFI setting switch, and the dual-WIFI setting switch is currently off; in response to detecting a click operation for the dual-WIFI setting switch, the electronic device sets the dual-WIFI setting switch on and enables the dual-WIFI function. This interface displays as illustrated in FIG. 2B.

At 202, the electronic device monitors a transmission rate of the target WIFI network periodically.

A period in which the electronic device monitors the transmission rate of the target WIFI network periodically is a first period, and a length of the first period can be 1 min, 3 min, 4 min, 8 min or other values.

The length of the first period can be fixed or dynamic, for example, the length of the first period is determined according to an application running in the foreground of the electronic device. Different types of applications correspond to different period lengths, for example, a game application corresponds to a period length, and a video application corresponds to another period length.

At 203, the electronic device disconnects the target WIFI network in response to monitoring that the transmission rate of the target WIFI network is less than a first transmission rate for N times, where N is an integer greater than 1.

The transmission rates for the N times are all less than the first transmission rate, and the transmission rates for the N times are continuously monitored.

The first transmission rate is, for example, 60 kb/min, 70 kb/min, 100 kb/min, 200 kb/min, 500 kb/min or other values.

The first transmission rate can be fixed or dynamic, for example, the first transmission rate is determined according to the application running in the foreground of the electronic device. Different types of applications correspond to different first transmission rates, for example a game application corresponds to a first transmission rate, and a video application corresponds to another first transmission rate.

The electronic device can disconnect the target WIFI network as follows. The electronic device sends a disconnection request to a target AP corresponding to the target WIFI network; the electronic device receives a disconnection response sent by the target AP for a disconnection situation, so as to disconnect the target WIFI network.

In an implementation of the disclosure, operations at 201 are executed only when the electronic device is in an off-screen state. Alternatively, operations at 201 are executed only when the electronic device is in an on-screen state and the application running in the foreground of the electronic device is a set application.

For the set application, a sum of a data amount to be received and a data amount to be sent within a first duration is less than a fifth threshold. The first duration is, for example, 1 min, 2 min, 3 min or other values. The set application includes, for example, a reading application, a payment application, etc. The fifth threshold can be 70kb, 80kb, 100kb, 500kb or other values, for example.

In an implementation of the disclosure, after operations at 203, the method further includes restricting the electronic device in accessing to the target WIFI network for a second duration.

The second duration is fixed (such as 10 min, 30 min, 50 min, 1 h or other values). Alternatively, the second duration is determined by the electronic device based on a currently processed task, and specifically, the electronic device determines a duration corresponding to the currently processed task based on a first mapping (relationship) between processed tasks and durations. The first mapping between processed tasks and durations is illustrated in Table 1.

**Table 1**

| Processed Task | Duration |
|---|---|
| Payment | 8 min |
| Game | 3 min |
| Reading | 10 min |
| ··· | ··· |

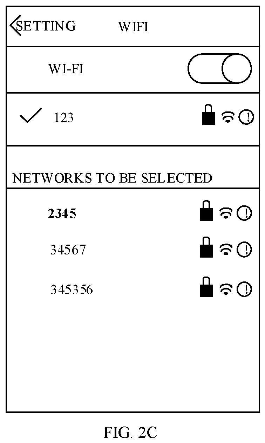

In an implementation of the disclosure, after restricting the electronic device in accessing to the target WIFI network, the method further includes marking, by the electronic device, the target WIFI network in the WIFI setting interface. The WIFI setting interface after marking the target WIFI network is illustrated in FIG. 2C. In FIG. 2C, the target WIFI network is "2345", and the target WIFI network is marked by thickening its name. The marking illustrated in FIG. 2C is by way of example only, and does not constitute a limitation on implementations of the disclosure.

A way to mark the target WIFI network can also be to change a color of the name of the target WIFI network, or to add a mark next to the name of the target WIFI network.

In an implementation of the disclosure, the electronic device is in the screen-off state, and a sum of a data amount currently to be received by the electronic device and a data amount to be sent is less than a sixth threshold. After operations at 203, the method further includes turning off, by the electronic device, the dual-WIFI function for a third duration.

The sixth threshold can be 60kb, 70kb, 80kb, 100kb, 500kb or other values, for example.

The third duration is fixed (for example, 8 min, 15 min, 30 min, 50 min, 1 h or other values). Alternatively, the third duration is determined by the electronic device based on a currently processed task, and specifically, the electronic device determines a duration corresponding to the currently processed task based on a second mapping between processed tasks and durations. The second mapping between processed tasks and durations is illustrated in Table 2.

**Table 2**

| Processed task | Duration |
|---|---|
| Download/Upload | 3 min |
| Audio Playback | 8 min |
| Calling | 15 min |
| ··· | ··· |

It can be seen that, in the implementations of the disclosure, the electronic device first determines one of the two accessed WIFI networks, then monitors the transmission rate of the one of the WIFI networks periodically, and finally disconnects the one of the two WIFI networks in response to determining that the transmission rate of the one of the two WIFI networks is less than a certain value for multiple times, so as to disconnect one of the WIFI networks according to actual situations of the WIFI networks, thereby reducing power consumption of the electronic device.

In an implementation of the disclosure, the transmission rate of the target WIFI network is monitored as follows.

A first timer is started. A first numerical value and/or a second numerical value is determined when the first timer expires, the first numerical value being a total data amount sent by the electronic device using the target WIFI network in a first time period, the second numerical value being a total data amount received by the electronic device using the target WIFI network in the first time period, and the first timer expires after the first time period ends. The transmission rate of the target WIFI network is determined based on the first numerical value and/or the second numerical value.

A start time of the first time period is earlier than time when the first timer is started for the first time. Starting the first timer for the first time refers to starting the first timer for the first time during an execution of operations at 202 by the electronic device this time. For example, if the time when the first timer is started for the first time is 8:00 am, then the start time of the first time period is earlier than 8:00 am.

A time difference between the start time of the first time period and the time when the first timer is started for the first time is the length of the first period. For example, assuming that the time when the first timer is started for the first time is 8:00 am and the length of the first period is 3 min, then the start time of the first time period is 7:57 am.

Alternatively, the time difference between the start time of the first time period and the time when the first timer is started for the first time is a seventh threshold. The seventh threshold can be 1min, 2 min, 5 min, 6 min or other values, for example. For example, assuming that the time when the first timer is started for the first time is 8:00 am and the seventh threshold is 2 min, then the start time of the first time period is 7:58 am.

The duration of the first timer is less than or equal to the length of the first period. For example, assuming that the length of the first period is 10 min, the duration of the first timer can also be 10min or less than 10 min (such as 2 min, 3 min or other values).

The duration of the first timer is determined based on the length of the first period. Specifically, the duration of the first timer is equal to the length of the first period multiplied by a first coefficient, and the first coefficient is a number less than or equal to 1. For example, assuming that the length of the first period is 3min and the first coefficient is 0.5, the duration of the first timer is 1.5 min.

The transmission rate of the target WIFI network is used to identify a network state of the target WIFI network. If the transmission rate of the target WIFI network is less than the first transmission rate, it is indicated that the network state of the target WIFI network is poor, otherwise, it is indicated that the network state of the target WIFI network is good.

In an implementation of the disclosure, the method further includes the following after monitoring the transmission rate of the target WIFI network each time.

The electronic device increases a value of a first counter by 1 when the transmission rate of the target WIFI network is less than the first transmission rate. The electronic device clears the value of the first counter when the transmission rate of the target WIFI network is greater than or equal to the first transmission rate. The electronic device determines that the transmission rate of the target WIFI network is less than the first transmission rate for N times when the value of the first counter is equal to N.

For example, assuming that the first transmission rate is a, a current value of the first counter is 1, and the transmission rate of the target WIFI network is b, if a is less than b, the value of the first counter is increased by 1, that is, the value of the first counter becomes 2, and if a is greater than or equal to b, the value of the first counter is cleared, that is, the value of the first counter becomes 0.

It can be seen that in the implementation of the disclosure, the counter is used to identify whether the WIFI network state is poor for many times in succession, so as to improve accuracy and convenience of counting.

In an implementation of the disclosure, the electronic device determines the target WIFI network includes.

The electronic device determines at least one of a third numerical value, a fourth numerical value, a fifth numerical value, and a sixth numerical value, where the third numerical value is a total data amount sent by the electronic device using one of the two WIFI networks in a second time period, the fourth numerical value is a total data amount received by the electronic device using the one of the two WIFI networks in the second time period, the fifth numerical value is a total data amount sent by the electronic device using the other one of the two WIFI networks in the second time period, the sixth numerical value is a total data amount received by the electronic device using the other one of the two WIFI networks in the second time period, and end time of the second time period is present moment. The electronic devices determines the target WIFI network based on one of the third numerical value, the fourth numerical value, the fifth numerical value, and the sixth numerical value.

The length of the second time period is, for example, 1 min, 2 min, 5 min, 10 min, 20 min or other values.

In an implementation of the disclosure, the electronic device determines the target WIFI network based on at least one of the third numerical value, the fourth numerical value, the fifth numerical value, and the sixth numerical value as follows.

The electronic device determines the target WIFI network based on the fourth numerical value and the sixth numerical value while a task currently processed by the electronic device includes a first task and the first task is processed using the two WIFI networks, where in the first task, a total data amount expected to be received by the electronic device is greater than or equal to a first threshold.

the electronic device determines the target WIFI network based on the fourth numerical value and the sixth numerical value as follows.

The electronic device defines the one of the WIFI networks as the target WIFI network when the fourth numerical value is greater than the sixth numerical value; defines the other one of the WIFI networks as the target WIFI network when the fourth numerical value is greater than the sixth numerical value. In the first task, a total data amount expected to be sent by the electronic device is less than the first threshold.

The first task is, for example, a download task (such as a video download task, an audio download task, a file download task, etc.), or other tasks with a large amount of total data to be received.

The first threshold can be 5 MB, 10 MB, 30 MB, 100 MB or other values.

The method for determining the target WIFI network according to the implementation of the disclosure can be executed when the electronic device is in an off-screen state or when the electronic device is in an on-screen state, which is not limited herein.

For example, assuming that there are two WIFI networks, WIFI network 1 and WIFI network 2, the electronic device processes the video download task using the two WIFI networks, and in the second time period, a total amount of data received by the electronic device using WIFI network 1 is 5 MB and a total amount of data received by the electronic device using WIFI network 2 is 2 MB, then the electronic device takes WIFI network 2 as the target WIFI network.

It can be seen that in the implementations of the disclosure, the currently processed task is a task with a large amount of data to be received, and at this time, a receiving capacity of the electronic device in this task is mainly concerned, so it is only necessary to compare total data amounts received using the two WIFI networks, and in this way, determination efficiency for the WIFI networks can be improved.

In an implementation of the disclosure, the electronic device determines the target WIFI network based on at least one of the third numerical value, the fourth numerical value, the fifth numerical value, and the sixth numerical value as follows.

The electronic device determines the target WIFI network based on the third numerical value and the fourth numerical value, and the fifth numerical value and the sixth numerical value while a task currently processed by the electronic device includes a second task and the second task is processed using the two WIFI networks.

The electronic device determines the target WIFI network based on the third numerical value and the fourth numerical value, and the fifth numerical value and the sixth numerical value as follows.

The electronic device defines the one of the WIFI networks as the target WIFI network when a sum of the third numerical value and the fourth numerical value is greater than a sum of the fifth numerical value and the sixth numerical value; defines the other one of the WIFI networks as the target WIFI network if the sum of the third numerical value and the fourth numerical value is less than the sum of the fifth numerical value and the sixth numerical value.

In the second task, the total data amount expected to be received by the electronic device is greater than or equal to the second threshold, and/or the total data amount expected to be sent by the electronic device is greater than or equal to the third threshold, and/or the total data amount expected to be received by the electronic device is less than the second threshold, and/or the total data amount expected to be sent by the electronic device is less than the third threshold.

The second threshold can be equal to the third threshold, the second threshold can be less than the third threshold, or the second threshold can be greater than the third threshold, which is not limited herein.

The second threshold can be 3 MB, 4 MB, 5 MB, 10 MB, 30 MB or other values. The third threshold can be 1 MB, 3 MB, 4 MB, 6 MB, 10 MB, 30 MB or other values.

The second task may be, for example, a download task, an upload task, an audio playback task, a video playback task, a reading task, a payment task, a call task or the like.

The method for determining the target WIFI network according to the implementation of the disclosure can be executed when the electronic device is in an off-screen state or when the electronic device is in an on-screen state, which is not limited herein.

For example, assuming that there are two WIFI networks, WIFI network 1 and WIFI network 2, and in the second time period, a total amount of data received by the electronic device with WIFI network 1 is 5 MB and a total amount of data sent by the electronic device with WIFI network 1 is 3 MB, and a total amount of data received by the electronic device with WIFI network 2 is 2 MB and a total amount of data sent by the electronic device with WIFI network 2 is 1 MB, then the electronic device takes WIFI network 2 as the target WIFI network.

It can be seen that in the implementation of the disclosure, the total data amount received and the total data amount sent using the two WIFI networks are used to determine the target WIFI network, and because more data are used for determining, the determination accuracy for the WIFI network is improved.

In an implementation of the disclosure, the electronic device determines the target WIFI network based on at least one of the third numerical value, the fourth numerical value, the fifth numerical value, and the sixth numerical value as follow.

The electronic device determines the target WIFI network based on the third numerical value and the fifth numerical value while a task currently processed by the electronic device includes a third task and the third task is processed using the two WIFI networks, where in the third task, a total data amount expected to be sent by the electronic device is greater than or equal to a fourth threshold.

The electronic device determines the target WIFI network based on the third numerical value and the fifth numerical value as follows.

The electronic device defines the one of the WIFI networks as the target WIFI network when the third numerical value is greater than the fifth numerical value; defines the other one of the WIFI networks as the target WIFI network when the third numerical value is greater than the fifth numerical value.

In the third task, a total data amount expected to be received by the electronic device is less than the fourth threshold.

The third task is, for example, an upload task (such as a video upload task, an audio upload task, a file upload task, etc.), or other tasks with a large amount of total data to be sent.

The fourth threshold can be 4 MB, 5 MB, 15 MB, 35 MB or other values.

The method for determining the target WIFI network according to the implementation of the disclosure can be executed when the electronic device is in an off-screen state or when the electronic device is in an on-screen state, which is not limited herein.

For example, assuming that there are two WIFI networks, WIFI network 1 and WIFI network 2, the electronic device processes the file upload task using the two WIFI networks, and in the second time period, a total amount of data sent by the electronic device with WIFI network 1 is 5 MB and a total amount of data sent by the electronic device with WIFI network 2 is 2 MB, then the electronic device takes WIFI network 2 as the target WIFI network.

It can be seen that in the implementation of the disclosure, the currently processed task is a task with a large amount of data to be sent, and at this time, a sending capacity of the electronic device in this task is mainly concerned, so it is only necessary to compare the total data amounts which are sent using the two WIFI networks, and in this way, determination efficiency for the WIFI networks can be improved.

In an implementation of the disclosure, the electronic device determines the transmission rate of the target WIFI network based on the first numerical value and the second numerical value as follows.

The electronic device determines the transmission rate of the target WIFI network based on a first formula, the first numerical value, the second numerical value, and at least two of the third numerical value, the fourth numerical value, the fifth numerical value, and the sixth numerical value.

The first formula is: speed=[(A+B) -(C+D)] /T, where the speed represents the transmission rate, T represents a duration of a period for monitoring the transmission rate of the target WIFI network, A and C each represent a total data amount sent by the electronic device using the WIFI network, B and D each represent a total data amount received by the electronic device using the WIFI network, determination time of A is adjacent to determination time of C, determination time of B is adjacent to determination time of D, the determination time of A is later than the determination time of C, and the determination time of B is later than the determination time of D.

If the one of the WIFI networks is defined as the target WIFI network, in the process of monitoring the transmission rate of the target WIFI network for the first time, the electronic device determines the transmission rate of the target WIFI network based on the first formula, the first numerical value, the second numerical value, the third numerical value, and the fourth numerical value. Monitoring the transmission rate of the target WIFI network for the first time refers to monitoring the transmission rate of the target WIFI network by the electronic device for the first time during an execution of operations at 202 this time.

For example, assuming that a length of a period for monitoring the transmission rate of the target WIFI network is 2 min, in the process of monitoring the transmission rate of the target WIFI network for the first time, the first numerical value determined by the electronic device is 6MB, and the second numerical value determined by the electronic device is 5MB, and if the third numerical value is 8MB and the fourth numerical value is 5MB, then the transmission rate of the target WIFI network is = [ (6+8)- (5+5) ]/ 2 = 2MB/min.

If the other one of the WIFI networks is defined as the target WIFI network, in the process of monitoring the transmission rate of the target WIFI network for the first time, the electronic device determines the transmission rate of the target WIFI network based on the first formula, the first numerical value, the second numerical value, the fifth numerical value, and the sixth numerical value. Monitoring the transmission rate of the target WIFI network for the first time refers to monitoring the transmission rate of the target WIFI network by the electronic device for the first time during an execution of operations at 202 this time.

For example, assuming that the length of the period for monitoring the transmission rate of the target WIFI network is 2 min, in the process of monitoring the transmission rate of the target WIFI network for the first time, the first numerical value determined by the electronic device is 7 MB, and the second numerical value determined by the electronic device is 4 MB, and if the fifth numerical value is 7 MB and the sixth numerical value is 6 MB, then the transmission rate of the target WIFI network is = [ (7+7) -(4+6) ]/ 2= 2 MB /min.

If it is not in the process of monitoring the transmission rate of the target WIFI network for the first time by the electronic device, the electronic device determines the transmission rate of the target WIFI network based on the first formula, the first numerical value, and the second numerical value.

For example, assuming that the length of the period for monitoring the transmission rate of the target WIFI network is 2 min, and in a process of monitoring the transmission rate of the target WIFI network this time, the first numerical value determined by the electronic device is 7 MB and the second numerical value determined by the electronic device is 4 MB, and if the first numerical value and the second numerical value determined by the electronic device during a last execution of a first process are 7 MB and 6 MB respectively, then the transmission rate of the target WIFI network is = [ (7+7) - (4+6) ]/ 2= 2 MB /min.

It can be seen that in the implementation of the disclosure, the transmission rate of the WIFI network is calculated by using the total data amounts sent and received by the electronic device with the WIFI network, which can improve accuracy in determining the transmission rate.

In an implementation of the disclosure, the electronic device determines the transmission rate of the target WIFI network based on the first numerical value as follows.

The electronic device determines the transmission rate of the target WIFI network based on a second formula, the first numerical value, and at least one of the third numerical value and the fifth numerical value.

The second formula is: speed= (E-F) /T, where the speed represents the transmission rate, T represents a duration of a period for monitoring the transmission rate of the target WIFI network, E and F each represent a total data amount sent by the electronic device using the WIFI network, determination time of E is adjacent to determination time of F, and the determination time of E is later than the determination time of F.

If the one of the WIFI networks is defined as the target WIFI network, in the process of monitoring the transmission rate of the target WIFI network for the first time, the electronic device determines the transmission rate of the target WIFI network based on the second formula, the first numerical value, and the third numerical value. Monitoring the transmission rate of the target WIFI network for the first time refers to monitoring the transmission rate of the target WIFI network by the electronic device for the first time during an execution of operations at 202 this time.

For example, assuming that the length of the period for monitoring the transmission rate of the target WIFI network is 2 min, and in the process of monitoring the transmission rate of the target WIFI network for the first time, the first numerical value determined by the electronic device is 6 MB, and if the third numerical value is 8 MB, then the transmission rate of the target WIFI network is = (8-6)/ 2 = 1 MB/min.

If the other one of the WIFI networks is defined as the target WIFI network, in the process of monitoring the transmission rate of the target WIFI network for the first time, the electronic device determines the transmission rate of the target WIFI network based on the second formula, the first numerical value, and the fifth numerical value. Monitoring the transmission rate of the target WIFI network for the first time refers to monitoring the transmission rate of the target WIFI network by the electronic device for the first time during an execution of operations at 202 this time.

For example, assuming that the length of the period for monitoring the transmission rate of the target WIFI network is 2 min, and in the process of monitoring the transmission rate of the target WIFI network for the first time, the first numerical value determined by the electronic device is 7 MB, and if the fifth numerical value is 9 MB, then the transmission rate of the target WIFI network is = (9-7)/ 2 = 1 MB/min.

If it is not in the process of monitoring the transmission rate of the target WIFI network for the first time by the electronic device, the electronic device determines the transmission rate of the target WIFI network based on the second formula and the first numerical value.

For example, assuming that the length of the period for monitoring the transmission rate of the target WIFI network is 2 min, and in the process of monitoring the transmission rate of the target WIFI network this time, the first numerical value determined by the electronic device is 5 MB, and if the first numerical value determined by the electronic device during a last execution of the first process is 9 MB, then the transmission rate of the target WIFI network is = (9-5) / 2= 2 MB /min.

It can be seen that in the implementation of the disclosure, the transmission rate of the WIFI network is calculated by using the total data amount sent by the electronic device with the WIFI network, which can improve efficiency in determining the transmission rate.

In an implementation of the disclosure, the electronic device determines the transmission rate of the target WIFI network based on the second numerical value as follows.

The electronic device determines the transmission rate of the target WIFI network based on a third formula, the second value, and at least one of the fourth numerical value and the sixth numerical value.

The third formula is: speed= (G-H) /T, where the speed represents an average transmission rate, T represents a duration of a period for monitoring the transmission rate of the target WIFI network, G and H each represent a total data amount received by the electronic device using the WIFI network, determination time of G is adjacent to determination time of H, and the determination time of G is later than the determination time of H.

If the one of the WIFI networks is defined as the target WIFI network, in the process of monitoring the transmission rate of the target WIFI network for the first time, the electronic device determines the transmission rate of the target WIFI network based on the third formula, the second numerical value, and the fourth numerical value. Monitoring the transmission rate of the target WIFI network for the first time refers to monitoring the transmission rate of the target WIFI network by the electronic device for the first time during an execution of operations at 202 this time.

For example, assuming that the length of the period for monitoring the transmission rate of the target WIFI network is 2 min, and in the process of monitoring the transmission rate of the target WIFI network for the first time, the second numerical value determined by the electronic device is 6 MB, and if the fourth numerical value is 8 MB, then the transmission rate of the target WIFI network is = (8-6)/ 2 = 1 MB/min.

If the other one of the WIFI networks is defined as the target WIFI network, in the process of monitoring the transmission rate of the target WIFI network for the first time, the electronic device determines the transmission rate of the target WIFI network based on the third formula, the first numerical value, and the fifth numerical value. Monitoring the transmission rate of the target WIFI network for the first time refers to monitoring the transmission rate of the target WIFI network by the electronic device for the first time during an execution of operations at 202 this time.

For example, assuming that the length of the period for monitoring the transmission rate of the target WIFI network is 2 min, and in the process of monitoring the transmission rate of the target WIFI network for the first time, the second numerical value determined by the electronic device is 7 MB, and if the sixth numerical value is 9 MB, then the transmission rate of the target WIFI network is = (9-7)/ 2 = 1 MB/min.

If it is not in the process of monitoring the transmission rate of the target WIFI network for the first time by the electronic device, the electronic device determines the transmission rate of the target WIFI network based on the third formula and the first numerical value.

For example, assuming that the length of the period for monitoring the transmission rate of the target WIFI network is 2 min, and in the process of monitoring the transmission rate of the target WIFI network this time, the second numerical value determined by the electronic device is 5 MB, and if the second numerical value determined by the electronic device during a last execution of the first process is 9MB, then the transmission rate of the target WIFI network is = (9-5) / 2= 2 MB /min.

It can be seen that in the implementation of the disclosure, the transmission rate of the WIFI network is calculated by using the total data amount received by the electronic device with the WIFI network, which can improve efficiency in determining the transmission rate.

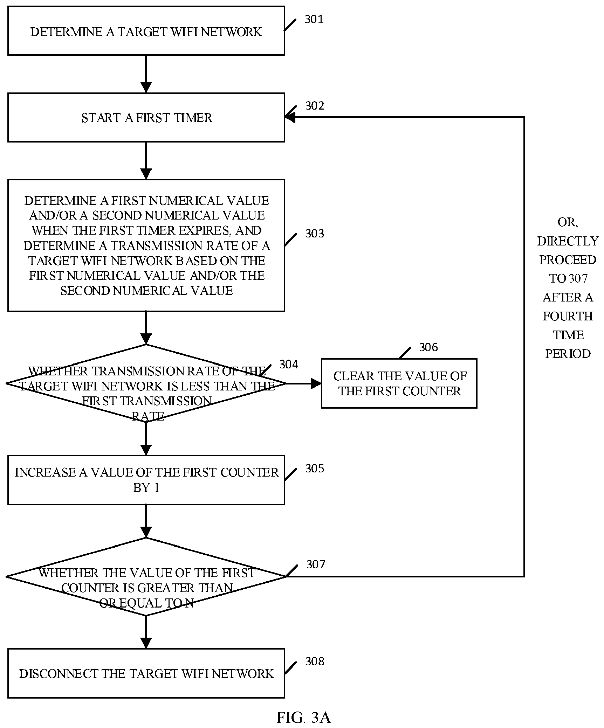

As is consistent with the implementations illustrated in FIG. 2A, reference is made to FIG. 3A, which is a schematic flow diagram of a WIFI network disconnecting method according to other implementations of the present disclosure. The WIFI network disconnecting method is applied to the above-mentioned electronic device currently accessing two WIFI networks, and specifically includes the following.

At 301, the electronic device determines a target WIFI network, where the two WIFI networks include the target WIFI network.

At 302, the electronic device starts a first timer.

At 303, the electronic device determines a first numerical value and/or a second numerical value when the first timer expires, and determines a transmission rate of a target WIFI network based on the first numerical value and/or the second numerical value.

At 304, the electronic device judges whether the determined transmission rate of the target WIFI network is less than the first transmission rate.

If YES, proceed to operations at 305; otherwise, proceed to operations at 306.

At 305, the electronic device increases a value of the first counter by 1. After operations at 305 are complete, operations at 307 are performed.

At 306, the electronic device clears the value of the first counter.

At 307, the electronic device judges whether the value of the first counter is greater than or equal to N.

If YES, proceed to operations at 308; otherwise, proceed to operations at 302 is performed after a fourth time period, or proceed to operations at 302 directly. The fourth time period is equal to a length of a period for monitoring the transmission rate of the target WIFI network minus a duration of the first timer.

At 308, the electronic device disconnects the target WIFI network.

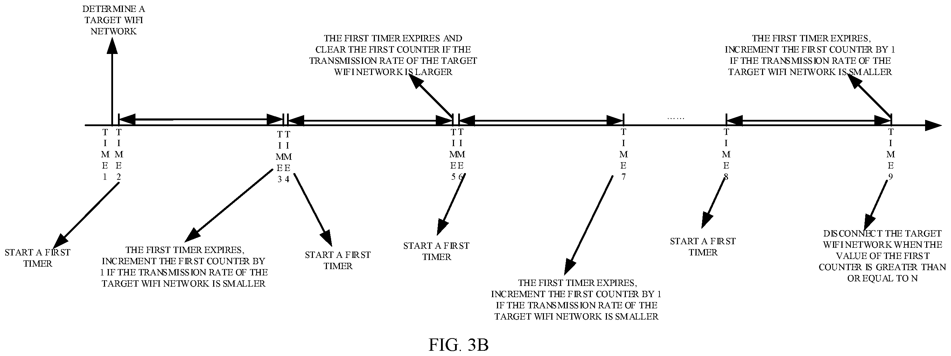

For example, assuming that the duration of the first timer is equal to the length of the period for monitoring the transmission rate of the target WIFI network. As illustrated in FIG. 3B, the electronic device determines the target WIFI network (such as WIFI network 1) at time 1, starts the first timer at time 2, and at time 3, the first timer expires, and the electronic device determines the transmission rate of the target WIFI network. If the transmission rate of the target WIFI network is less than the first transmission rate, the value of the first counter is increased by 1 (at this time, the value of the first counter is equal to 1). The electronic device starts the first timer at time 4, and at time 5, the first timer expires, and the electronic device determines the transmission rate of the target WIFI network. If the transmission rate of the target WIFI network is greater than the first transmission rate, the value of the first counter is cleared (at this time, the value of the first counter is equal to 0). The electronic device starts the first timer at time 6, and at time 7, the first timer expires, and the electronic device determines the transmission rate of the target WIFI network. If the transmission rate of the target WIFI network is less than the first transmission rate, the value of the first counter is increased by 1 (at this time, the value of the first counter is equal to 1). By such analogy, the electronic device starts the first timer at time 8, and at time 9, the first timer expires, and the electronic device determines the transmission rate of the target WIFI network, If the transmission rate of the target WIFI network is less than the first transmission rate, the value of the first counter is increased by 1, and at this time if the value of the first counter is greater than or equal to N, the WIFI network is disconnected.

It should be noted that a specific implementation process of this implementation can be referred to the specific implementation process described in the above method implementations, and will not be repeatedly described here.

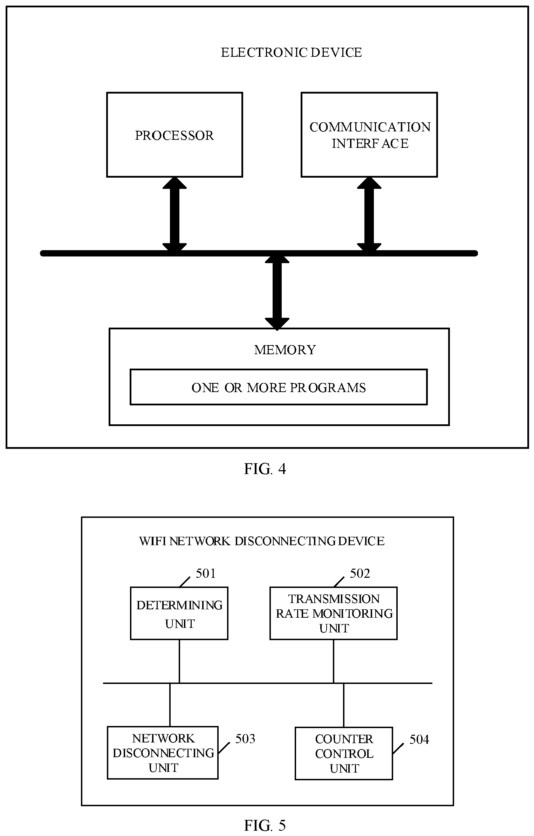

As is consistent with the above-mentioned implementations illustrated in FIGs. 2A and 3A, reference is made to FIG. 4, which is a structural schematic diagram of an electronic device provided in implementations of the disclosure. As illustrated, the electronic device includes a processor, a memory, a communication interface, and one or more programs. The one or more programs are stored in the memory and configured to be executed by the processor, and the programs include instructions for executing following operations.

A target WIFI network is determined, the two WIFI networks including the target WIFI network. A transmission rate of the target WIFI network is monitored periodically. The target WIFI network is disconnected in response to monitoring that the transmission rate of the target WIFI network is less than a first transmission rate for N times, N being an integer greater than 1.

It can be seen that, in the implementations of the disclosure, the electronic device first determines one of the two accessed WIFI networks, then monitors the transmission rate of the one of the WIFI networks periodically, and finally disconnects the one of the two WIFI networks in response to monitoring that the transmission rate of the one of the two WIFI networks is less than a certain value for multiple times, so as to disconnect one of the WIFI networks according to actual situations of the WIFI networks, thereby reducing power consumption of the electronic device.

In an implementation of the disclosure, in terms of monitoring the transmission rate of the target WIFI network, the above programs include instructions specifically for performing following operations.

A first timer is started. A first numerical value and/or a second numerical value is determined when the first timer expires, the first numerical value being a total data amount sent by the electronic device using the target WIFI network in a first time period, the second numerical value being a total data amount received by the electronic device using the target WIFI network in the first time period, and end time of the first time period being time when the first timer expires. The transmission rate of the target WIFI network is determined based on the first numerical value and/or the second numerical value.

In an implementation of the disclosure, the above programs include instructions for further performing following operations after the transmission rate of the target WIFI network is monitored each time.

A value of a first counter is increased by 1 when the transmission rate of the target WIFI network is less than the first transmission rate. The value of the first counter is cleared when the transmission rate of the target WIFI network is greater than or equal to the first transmission rate. The transmission rate of the target WIFI network is determined to be less than the first transmission rate for N times when the value of the first counter is equal to N.

In an implementation of the disclosure, in terms of determining the target WIFI network, the above programs include instructions specifically for performing following operations.

At least one of a third numerical value, a fourth numerical value, a fifth numerical value, and a sixth numerical value is determined, the third numerical value being a total data amount sent by the electronic device using one of the two WIFI networks in a second time period, the fourth numerical value being a total data amount received by the electronic device using the one of the two WIFI networks in the second time period, the fifth numerical value being a total data amount sent by the electronic device using the other one of the two WIFI networks in the second time period, the sixth numerical value being a total data amount received by the electronic device using the other one of the two WIFI networks in the second time period, and end time of the second time period being present moment. The target WIFI network is determined based on one of the third numerical value, the fourth numerical value, the fifth numerical value, and the sixth numerical value.

In an implementation of the disclosure, in terms of determining the target WIFI network based on at least one of the third numerical value, the fourth numerical value, the fifth numerical value, and the sixth numerical value, the above programs include instructions specifically for performing following operations.

The target WIFI network is determined based on the fourth numerical value and the sixth numerical value while a task currently processed by the electronic device includes a first task and the first task is processed using the two WIFI networks, where in the first task, a total data amount expected to be received by the electronic device being greater than or equal to a first threshold.

In an implementation of the disclosure, in terms of determining the target WIFI network based on at least one of the third numerical value, the fourth numerical value, the fifth numerical value and the sixth numerical value, the above programs include instructions specifically for performing following operations.

The target WIFI network is determined based on the third numerical value and the fourth numerical value, and the fifth numerical value and the sixth numerical value while a task currently processed by the electronic device includes a second task and the second task is processed using the two WIFI networks.

In an implementation of the disclosure, in terms of determining the transmission rate of the target WIFI network based on the first numerical value and the second numerical value, the above program includes instructions specifically for performing following operations.

The transmission rate of the target WIFI network is determined based on a first formula, the first numerical value, the second numerical value, and at least two of the third numerical value, the fourth numerical value, the fifth numerical value, and the sixth numerical value.

The first formula is: speed= [(A+B) -(C+D)] /T, where speed is the transmission rate, T represents a period for performing the first process, A and C each represent a total data amount sent by the electronic device using the WIFI network, B and D each represent a total data amount received by the electronic device using the WIFI network, determination time of A is adjacent to determination time of C, determination time of B is adjacent to determination time of D, the determination time of A is later than the determination time of C, and the determination time of B is later than the determination time of D.

In an implementation of the disclosure, in terms of determining the transmission rate of the target WIFI network based on the first numerical value, the above program includes instructions specifically for performing following operations.

The transmission rate of the target WIFI network is determined based on a second formula, the first numerical value, and at least one of the third numerical value and the fifth numerical value.

The second formula is: speed= (E-F) /T, where the speed represents the transmission rate, T represents a duration of a period for monitoring the transmission rate of the target WIFI network, E and F each represent a total data amount sent by the electronic device using the WIFI network, determination time of E is adjacent to determination time of F, and the determination time of E is later than the determination time of F.

In an implementation of the disclosure, in terms of determining the transmission rate of the target WIFI network based on the second numerical value, the above program includes instructions specifically for performing following operations.

The transmission rate of the target WIFI network is determined based on a third formula, the second value, and at least one of the fourth numerical value and the sixth numerical value.

The third formula is: speed= (G-H) /T, where the speed represents an average transmission rate, T represents a duration of a period for monitoring the transmission rate of the target WIFI network, G and H each represent a total data amount received by the electronic device using the WIFI network, determination time of G is adjacent to determination time of H, and the determination time of G is later than the determination time of H.

It should be noted that a specific implementation process of this implementation can be referred to the specific implementation process described in the above method implementation, and will not be repeatedly described here.

Reference is made to FIG. 5, which is a schematic structural diagram of a WIFI network disconnecting device provided in implementations of the present disclosure, and the WIFI network disconnecting device includes a determining unit 501, a transmission rate monitoring unit 502, and a network disconnecting unit 503.

The determining unit 501 is configured to determine a target WIFI network, where the two WIFI networks includes the target WIFI network.

The transmission rate monitoring unit 502 is configured to monitor a transmission rate of the target WIFI network periodically

The network disconnecting unit 503 is configured to disconnect the target WIFI network in response to monitoring that the transmission rate of the target WIFI network is less than a first transmission rate for N times, N being an integer greater than 1.

It can be seen that, in the implementations of the disclosure, the electronic device first determines one of the two accessed WIFI networks, then monitors the transmission rate of the one of the WIFI networks periodically, and finally disconnects the one of the two WIFI networks in response to monitoring that the transmission rate of the one of the two WIFI networks is less than a certain value for multiple times, so as to disconnect one of the WIFI networks according to actual situations of the WIFI networks, thereby reducing power consumption of the electronic device.

In an implementation of the disclosure, in terms of monitoring the transmission rate of the target WIFI network, the transmission rate monitoring unit 502 is specifically configured to: start a first timer; determine a first numerical value and/or a second numerical value when the first timer expires, the first numerical value being a total data amount sent by the electronic device using the target WIFI network in a first time period, the second numerical value being a total data amount received by the electronic device using the target WIFI network in the first time period, and the first timer expires when the first time period ends; determine the transmission rate of the target WIFI network based on the first numerical value and/or the second numerical value.

In an implementation of the disclosure, the device further includes a counter control unit 504.

The counter control unit 504 is configured to, after monitoring the transmission rate of the target WIFI network each time, increase a value of a first counter by 1 when the transmission rate of the target WIFI network is less than the first transmission rate; and clear the value of the first counter when the transmission rate of the target WIFI network is greater than or equal to the first transmission rate.

The determining unit 501 is further configured to determine that the transmission rate of the target WIFI network is less than the first transmission rate for N times when the value of the first counter is equal to N.

In an implementation of the disclosure, in terms of determining the target WIFI network, the determining unit 501 is specifically configured to: determine at least one of a third numerical value, a fourth numerical value, a fifth numerical value, and a sixth numerical value, the third numerical value being a total data amount sent by the electronic device using one of the two WIFI networks in a second time period, the fourth numerical value being a total data amount received by the electronic device using the one of the two WIFI networks in the second time period, the fifth numerical value being a total data amount sent by the electronic device using the other one of the two WIFI networks in the second time period, the sixth numerical value being a total data amount received by the electronic device using the other one of the two WIFI networks in the second time period, and end time of the second time period being present moment; determine the target WIFI network based on one of the third numerical value, the fourth numerical value, the fifth numerical value, and the sixth numerical value.

In an implementation of the disclosure, in terms of determining the target WIFI network based on at least one of the third numerical value, the fourth numerical value, the fifth numerical value and the sixth numerical value, the determining unit 501 is specifically configured to: determine the target WIFI network based on the fourth numerical value and the sixth numerical value while a task currently processed by the electronic device includes a first task and the first task is processed using the two WIFI networks; in the first task, a total data amount expected to be received by the electronic device being greater than or equal to a first threshold.

In an implementation of the disclosure, in terms of determining the target WIFI network based on at least one of the third numerical value, the fourth numerical value, the fifth numerical value and the sixth numerical value, the determining unit 501 is specifically configured to: determine the target WIFI network based on the third numerical value and the fourth numerical value, and the fifth numerical value and the sixth numerical value while a task currently processed by the electronic device includes a second task and the second task is processed using the two WIFI networks.

In an implementation of the disclosure, in terms of determining the transmission rate of the target WIFI network based on the first numerical value and the second numerical value, the transmission rate monitoring unit 502 is specifically configured to: determine the transmission rate of the target WIFI network based on a first formula, the first numerical value, the second numerical value, and at least two of the third numerical value, the fourth numerical value, the fifth numerical value, and the sixth numerical value.

The first formula is: speed= [(A+B) -(C+D)] /T, where speed is the transmission rate, T represents a period for performing the first process, A and C each represent a total data amount sent by the electronic device using the WIFI network, B and D each represent a total data amount received by the electronic device using the WIFI network, determination time of A is adjacent to determination time of C, determination time of B is adjacent to determination time of D, the determination time of A is later than the determination time of C, and the determination time of B is later than the determination time of D.

In an implementation of the disclosure, in terms of determining the transmission rate of the target WIFI network based on the first numerical value, the transmission rate monitoring unit 502 is specifically configured to: determine the transmission rate of the target WIFI network based on a second formula, the first numerical value, and at least one of the third numerical value and the fifth numerical value.

The second formula is: speed= (E-F)/T, where the speed represents the transmission rate, T represents a duration of a period for monitoring the transmission rate of the target WIFI network, E and F each represent a total data amount sent by the electronic device using the WIFI network, determination time of E is adjacent to determination time of F, and the determination time of E is later than the determination time of F.

In an implementation of the disclosure, in terms of determining the transmission rate of the target WIFI network based on the second numerical value, the transmission rate monitoring unit 502 is specifically configured to: determine the transmission rate of the target WIFI network based on a third formula, the second value, and at least one of the fourth numerical value and the sixth numerical value.

The third formula is: speed= (G-H) /T, where the speed represents an average transmission rate, T represents a duration of a period for monitoring the transmission rate of the target WIFI network, G and H each represent a total data amount received by the electronic device using the WIFI network, determination time of G is adjacent to determination time of H, and the determination time of G is later than the determination time of H.

It should be noted that, the determining unit 501, the transmission rate monitoring unit 502, the disconnection unit 503, and the counter control unit 504 of the electronic device can be realized by a processor.

Implementations of the present disclosure further provide a computer-readable storage medium. The computer-readable storage medium stores a computer program for Electronic Data Interchange (EDI). The computer program causes a computer to perform some or all of operations as described for the electronic device in the above method implementations.

Implementations of the present disclosure further provide a computer program product. The computer program product includes a non-transitory computer readable storage medium storing a computer program. The computer program is operable to cause a computer to perform some or all of operations as described for the electronic device in the above method implementations. The computer program product can be a software installation package.

The operations of the method or algorithm described in the implementations of the disclosure can be realized in hardware or by the processor executing software instructions. The software instructions can be composed of corresponding software modules, which can be stored in random access memory (RAM), flash memory, Read Only Memory (ROM), erasable programmable ROM (EPROM), electrically EPROM (EEPROM), register, hard disk, removable hard disk, CD-ROM or any other form of storage medium known in the art. An exemplary storage medium is coupled to the processor so that the processor can read information from and write information to the storage medium. Of course, the storage medium can also be an integral part of the processor. The processor and the storage medium may be located in an ASIC. In addition, the ASIC can be located in an access network device, a target network device or a core network device. Of course, the processor and the storage medium can also exist as discrete components in the access network device, the target network device or the core network device.

Those skilled in the art should realize that in one or more of the above examples, functions described in the implementations of the disclosure can be realized in whole or in part in software, hardware, firmware or any combination thereof. When implemented in software, it can be fully or partially implemented in a form of a computer program product. The computer program product includes one or more computer instructions. When the computer program instructions are loaded and executed on a computer, all or part of the processes or functions described in the implementations of the disclosure are generated. The computer can be a general-purpose computer, a special-purpose computer, a computer network, or other programmable devices. The computer instructions can be stored in a computer-readable storage medium or transmitted from one computer-readable storage medium to another computer-readable storage medium. For example, the computer instructions can be transmitted from one website site, computer, server or data center to another website site, computer, server or data center by wire (such as a coaxial cable, an optical fiber, and a digital subscriber line (DSL)) or wirelessly (such as infrared, radio, microwave, etc.). The computer-readable storage medium can be any available medium that a computer can access or a data storage device including one or more available media integrated servers, data centers or the like. The available media can be magnetic media (e.g., floppy disk, hard disk, and magnetic tape), optical media (e.g., digital video disc (DVD)), or semiconductor media (e.g., solid state disk (SSD)), etc.

The purposes, technical schemes and beneficial effects of the disclosure are detailed in specific implementations described above. It should be understood that the above description is only the specific implementations of the disclosure and is not intended to limit a protection scope of the disclosure. Any modification, equivalent replacement, improvement, etc. on a basis of the technical schemes of the disclosure should be encompassed in the protection scope of the disclosure.

## Claims

1. A wireless fidelity (WIFI) network disconnecting method, applied to an electronic device accessing two WIFI networks and comprising:
determining a target WIFI network, the two WIFI networks comprising the target WIFI network;
monitoring a transmission rate of the target WIFI network periodically; and
disconnecting the target WIFI network in response to monitoring that the transmission rate of the target WIFI network is less than a first transmission rate for N times, N being an integer greater than 1.

2. The method of claim 1, wherein monitoring the transmission rate of the target WIFI network comprises:
starting a first timer;
determining a first numerical value and/or a second numerical value when the first timer expires, wherein the first numerical value is a total data amount sent by the electronic device using the target WIFI network in a first time period, the second numerical value is a total data amount received by the electronic device using the target WIFI network in the first time period, and the first timer expires after the first time period ends; and
determining the transmission rate of the target WIFI network based on the first numerical value and/or the second numerical value.

3. The method of claim 2, further comprising:
after monitoring the transmission rate of the target WIFI network each time:
increasing a value of a first counter by 1 in response to the transmission rate of the target WIFI network being less than the first transmission rate;
clearing the value of the first counter in response to the transmission rate of the target WIFI network being greater than or equal to the first transmission rate; and
determining that the transmission rate of the target WIFI network is less than the first transmission rate for N times in response to the value of the first counter being equal to N.

4. The method of any one of claims 1 to 3, wherein determining the target WIFI network comprises:
determining at least one of a third numerical value, a fourth numerical value, a fifth numerical value, and a sixth numerical value, the third numerical value being a total data amount sent by the electronic device using one of the two WIFI networks in a second time period, the fourth numerical value being a total data amount received by the electronic device using the one of the two WIFI networks in the second time period, the fifth numerical value being a total data amount sent by the electronic device using the other one of the two WIFI networks in the second time period, the sixth numerical value being a total data amount received by the electronic device using the other one of the two WIFI networks in the second time period, and end time of the second time period being present moment; and
determining the target WIFI network based on one of the third numerical value, the fourth numerical value, the fifth numerical value, and the sixth numerical value.

5. The method of claim 4, wherein determining the target WIFI network based on the at least one of the third numerical value, the fourth numerical value, the fifth numerical value, and the sixth numerical value comprises:
determining, by the electronic device, the target WIFI network based on the fourth numerical value and the sixth numerical value while a task currently processed by the electronic device comprises a first task and the first task is processed using the two WIFI networks; in the first task, a total data amount expected to be received by the electronic device being greater than or equal to a first threshold.

6. The method of claim 4, wherein determining the target WIFI network based on the at least one of the third numerical value, the fourth numerical value, the fifth numerical value and the sixth numerical value comprises:
determining, by the electronic device, the target WIFI network based on the third numerical value and the fourth numerical value, and the fifth numerical value and the sixth numerical value while a task currently processed by the electronic device comprises a second task and the second task is processed using the two WIFI networks.

7. The method of any one of claims 4 to 6, wherein determining the transmission rate of the target WIFI network based on the first numerical value and the second numerical value comprises:
determining the transmission rate of the target WIFI network based on a first formula, the first numerical value, the second numerical value, and at least two of the third numerical value, the fourth numerical value, the fifth numerical value, and the sixth numerical value;
wherein the first formula is: speed=[(A+B) -(C+D)] /T, wherein the speed represents the transmission rate, T represents a duration of a period for monitoring the transmission rate of the target WIFI network, A and C each represent a total data amount sent by the electronic device using the WIFI network, B and D each represent a total data amount received by the electronic device using the WIFI network, determination time of A is adjacent to determination time of C, determination time of B is adjacent to determination time of D, the determination time of A is later than the determination time of C, and the determination time of B is later than the determination time of D.

8. The method of any one of claims 4 to 6, wherein determining the transmission rate of the target WIFI network based on the first numerical value comprises:
determining the transmission rate of the target WIFI network based on a second formula, the first numerical value, and at least one of the third numerical value and the fifth numerical value;
wherein the second formula is: speed= (E-F) /T, wherein the speed represents the transmission rate, T represents a duration of a period for monitoring the transmission rate of the target WIFI network, E and F each represent a total data amount sent by the electronic device using the WIFI network, determination time of E is adjacent to determination time of F, and the determination time of E is later than the determination time of F.

9. The method of any one of claims 4 to 6, wherein determining the transmission rate of the target WIFI network based on the second numerical value comprises:
determining the transmission rate of the target WIFI network based on a third formula, the second value, and at least one of the fourth numerical value and the sixth numerical value;
wherein the third formula is: speed= (G-H) /T, wherein the speed represents an average transmission rate, T represents a duration of a period for monitoring the transmission rate of the target WIFI network, G and H each represent a total data amount received by the electronic device using the WIFI network, determination time of G is adjacent to determination time of H, and the determination time of G is later than the determination time of H.

10. A wireless fidelity WIFI network disconnecting device, comprising:
a determining unit configured to determine a target WIFI network, the two WIFI networks comprising the target WIFI network;
a transmission rate monitoring unit configured to monitor a transmission rate of the target WIFI network periodically; and
a network disconnecting unit configured to disconnect the target WIFI network in response to monitoring that the transmission rate of the target WIFI network is less than a first transmission rate for N times, N being an integer greater than 1.

11. The device of claim 10, wherein in terms of monitoring the transmission rate of the target WIFI network, the transmission rate monitoring unit is configured to:
start a first timer;
determine a first numerical value and/or a second numerical value when the first timer expires, wherein the first numerical value is a total data amount sent by the electronic device using the target WIFI network in a first time period, the second numerical value is a total data amount received by the electronic device using the target WIFI network in the first time period, and the first timer expires after the first time period ends; and
determine the transmission rate of the target WIFI network based on the first numerical value and/or the second numerical value.

12. The device of claim 11, further comprising:
a counter control unit configured to, after monitoring the transmission rate of the target WIFI network each time, increase a value of a first counter by 1 when the transmission rate of the target WIFI network is less than the first transmission rate; and clear the value of the first counter when the transmission rate of the target WIFI network is greater than or equal to the first transmission rate; and
the determining unit being further configured to determine that the transmission rate of the target WIFI network is less than the first transmission rate for N times when the value of the first counter is equal to N.

13. The device of any one of claims 10 to 12, wherein in terms of determining the target WIFI network, the determining unit is configured to:
determine at least one of a third numerical value, a fourth numerical value, a fifth numerical value, and a sixth numerical value, the third numerical value being a total data amount sent by the electronic device using one of the two WIFI networks in a second time period, the fourth numerical value being a total data amount received by the electronic device using the one of the two WIFI networks in the second time period, the fifth numerical value being a total data amount sent by the electronic device using the other one of the two WIFI networks in the second time period, the sixth numerical value being a total data amount received by the electronic device using the other one of the two WIFI networks in the second time period, and end time of the second time period being present moment; and
determine the target WIFI network based on one of the third numerical value, the fourth numerical value, the fifth numerical value, and the sixth numerical value.

14. The device of claim 13, wherein terms of the target WIFI network based on the one of the third numerical value, the fourth numerical value, the fifth numerical value, and the sixth numerical value, the determining unit is configured to:
determine the target WIFI network based on the fourth numerical value and the sixth numerical value while a task currently processed by the electronic device comprises a first task and the first task is processed using the two WIFI networks; in the first task, a total data amount expected to be received by the electronic device being greater than or equal to a first threshold.

15. The device of claim 13, wherein in terms of determining the target WIFI network based on the at least one of the third numerical value, the fourth numerical value, the fifth numerical value, and the sixth numerical value, the determining unit is configured to:
determine the target WIFI network based on the third numerical value and the fourth numerical value, and the fifth numerical value and the sixth numerical value while a task currently processed by the electronic device comprises a second task and the second task is processed using the two WIFI networks.

16. The device of any one of claims 13 to 15, wherein in terms of determining the transmission rate of the target WIFI network based on the first numerical value and the second numerical value, the transmission rate monitoring unit is configured to:
determine the transmission rate of the target WIFI network based on a first formula, the first numerical value, the second numerical value, and at least two of the third numerical value, the fourth numerical value, the fifth numerical value, and the sixth numerical value;
wherein the first formula is: speed= [(A+B) -(C+D)] /T, wherein the speed represents the transmission rate, T represents a duration of a period for monitoring the transmission rate of the target WIFI network, A and C each represent a total data amount sent by the electronic device using the WIFI network, B and D each represent a total data amount received by the electronic device using the WIFI network, determination time of A is adjacent to determination time of C, determination time of B is adjacent to determination time of D, the determination time of A is later than the determination time of C, and the determination time of B is later than the determination time of D.

17. The device of any one of claims 13 to 15, wherein in terms of determining the transmission rate of the target WIFI network based on the first numerical value, the transmission rate monitoring unit is configured to:
determine the transmission rate of the target WIFI network based on a second formula, the first numerical value, and at least one of the third numerical value and the fifth numerical value;
wherein the second formula is: speed= (E-F) /T, wherein the speed represents the transmission rate, T represents a duration of a period for monitoring the transmission rate of the target WIFI network, E and F each represent a total data amount sent by the electronic device using the WIFI network, determination time of E is adjacent to determination time of F, and the determination time of E is later than the determination time of F.

18. The device of any one of claims 13 to 15, wherein in terms of determining the transmission rate of the target WIFI network based on the second numerical value, the transmission rate monitoring unit is configured to:
determine the transmission rate of the target WIFI network based on a third formula, the second value, and at least one of the fourth numerical value and the sixth numerical value;
wherein the third formula is: speed= (G-H) /T, wherein the speed represents an average transmission rate, T represents a duration of a period for monitoring the transmission rate of the target WIFI network, G and H each represent a total data amount received by the electronic device using the WIFI network, determination time of G is adjacent to determination time of H, and the determination time of G is later than the determination time of H.

19. An electronic device, comprising a processor, a memory, a communication interface, and one or more programs, wherein the one or more programs are stored in the memory and configured to be executed by the processor, and the programs comprise instructions for executing operations of the method of any one of claims 1 to 9.

20. A computer-readable storage medium storing a computer program, wherein the computer program is processed to execute the method of any one of claims 1 to 9.
